# EUROPEAN PATENT SPECIFICATION

(11) **EP 2 883 908 B1**
(45) Date of publication and mention of the grant of the patent: **21.12.2016**
(21) Application number: 13827844.5
(22) Date of filing: 25.07.2013
(51) Int. Cl.: C08L 9/02, C08K 3/36, C08L 71/02, C09K 3/10, F16J 15/10

(54) **NBR COMPOSITION**
NBR-ZUSAMMENSETZUNG
COMPOSITION DE CAOUTCHOUC NBR

(30) Priority: 09.08.2012 JP 2012177510
(43) Date of publication of application: 17.06.2015
(73) Proprietor: NOK Corporation, Tokyo 105-8585 (JP)
(72) Inventor: AOYAGI Ayako, Fujisawa-shi Kanagawa 251-0042 (JP)
(74) Representative: Laufhütte, Dieter
(86) International application number: PCT/JP2013/070220
(87) International publication number: WO 2014/024698

(56) References cited:
- WO-A1-2007/099724
- JP-A- 2003 335 901
- JP-A- 2007 291 295
- JP-A- 2009 281 524
- JP-A- 2011 202 092
- US-A1- 2003 096 071
- US-A1- 2009 062 445
- US-A1- 2009 258 980

## Description

### Technical field

The present invention relates to an NBR composition, specifically to an NBR composition excellent in cold resistance and heat resistance, which can be used with broad temperature ranges, and to an NBR composition excellent in oil resistance without substantially degrading compression set characteristics.

### Background art

The materials of sealing parts such as a gasket, etc., have been required to have physical properties such as heat resistance, oil resistance, cold resistance, etc., from their uses, and NBR, HNBR, FKM, etc., have generally been used.

Among these, HNBR is a material in which the double bond of the NBR has been hydrogenated, which is excellent in heat resistance but expensive. Accordingly, it was necessary to use the materials separately that inexpensive NBR was used for the parts that did not require higher heat resistance, while HNBR was used for the parts that required higher heat resistance. In the viewpoint of suppressing the material cost, the demand to use the NBR for the parts which require heat resistance with a certain extent has been increasing.

As required heat resistance, it is specifically required, after allowing to stand in the air at 150°C for 70 hours, to have a change in hardness within ±10 points (DuroA (instantaneous) JIS K6253: 1997), a rate of change in tensile strength within ±40%, and a rate of change in ultimate elongation within ±50%.

Further, in recent years, uses at lower temperatures have simultaneously been expanded even more.

To such a demand requiring an NBR composition that satisfies heat resistance, cold resistance, and other physical properties, an attempt to realize the requested physical properties, heat resistance and cold resistance has been made by changing the formulation of the composition.

For example, in Patent Document 1, to provide an NBR series composition which is suitably used as a molded material of a sealing material for sliding requiring gas permeability resistance, and satisfying both of gas permeability resistance and low temperature characteristics without substantially lowering heat resistance or compression set characteristics, there is disclosed that the problems have been solved by an NBR series composition comprising NBR or hydrogenated NBR having a nitrile content of 36% or less, lamellar filler having an aspect ratio (flake diameter/flake thickness) of 10 or more, zinc oxide and an organic peroxide.

However, physical properties that are required simultaneously with heat resistance and cold resistance include many things depending on the uses of the NBR material, it has not yet been satisfied all the physical properties, and it must be necessary to improve the NBR material depending on the uses.

### Prior art document

### Patent document

Patent Document 1: JP H8-217919A

### Summary of the invention

An intake manifold gasket mounted between the binding surface of a cylinder head and an intake manifold of an engine is provided near to a combustion chamber of the engine, so that it must be excellent in heat resistance and oil resistance, and must be so constituted that it can endure severe external environment. As the cold resistance, it is specifically required to have a sealing property at -20°C or lower.

That is, an NBR material excellent in cold resistance and heat resistance which can be used in broad temperature ranges, and an NBR composition excellent in oil resistance without substantially lowering compression set characteristics have been demanded.

The present inventor has found out that a sealing property can be maintained under a low temperature of -35°C or so by using a polymer having a low acrylonitrile content, and a sealing property can be retained under a low temperature as well as excellent heat resistance can be retained by using silica having a large primary particle size as a filler, and an ether ester series plasticizer as a plasticizer.

It was also found out that the NBR composition of the present invention is excellent in oil resistance without degrading compression set characteristics.

Thus, an object of the present invention is to provide an NBR composition excellent in cold resistance and heat resistance which can be used with broad temperature ranges, and to provide an NBR composition excellent in oil resistance without substantially degrading compression set characteristics.

Also, the other problems of the present invention become clear by the following descriptions.

### Means to solve the problems

The above-mentioned problems are solved by the following respective inventions.

### 1. A NBR composition comprising an NBR polymer, silica, an ether ester plasticizer and a cross-linking agent, which comprises

100 parts by weight of the NBR polymer where an acrylonitrile content of the NBR polymer is within the range of 20 to 40%,
10 to 150 parts by weight of silica a primary particle size of which is within the range of 50 nm or bigger, and
3 to 20 parts by weight of an ether ester plasticizer a weight average molecular weight MW of which is 500 or more.

### 2. The NBR composition according to 1, wherein the ether ester plasticizer is polyethylene glycol-di-2-ethylhexanoate.

### 3. The NBR composition according to 1 or 2, which is used as an intake manifold gasket and other rubber part.

### Effects of the invention

According to the present invention, it can be provided an NBR composition excellent in cold resistance and heat resistance which can be used in broad temperature ranges, and an NBR composition excellent in oil resistance without substantially degrading compression set characteristics.

### Embodiments to carry out the invention

In the following, embodiments of the present invention are explained.

The NBR composition of the present invention contains 10 to 150 parts by weight of silica as a filler, and 3 to 20 parts by weight of an ether ester series plasticizer having a weight average molecular weight MW of 500 or more as a plasticizer based on 100 parts by weight of an NBR polymer.

As the NBR polymer, a material having an acrylonitrile (AN) content in the range of 20 to 40%, preferably in the range of 20 to 35%, further preferably in the range of 23 to 35% is used.

In the present invention, it is preferred to use an NBR polymer with a low acrylonitrile content since it can possess sealing property under a low temperature at - 20 °C or lower, preferably -30 °C or lower, further preferably -40 °C or lower.

If the acrylonitrile content is less than 20%, oil resistance is poor so that it is not suitable as a material. If it exceeds 40%, sealing property at -20°C cannot be ensured.

The acrylonitrile content can be adjusted by optionally combining polymers with various acrylonitrile contents.

The NBR polymer to be used in present invention can be obtained as a commercially available product, and the commercially available product may be mentioned, "N250S" (AN content: 20%) available from JSR Corporation, "NT4301" (AN content: 23%) available from JSR Corporation, "N236H" (AN content: 32%) available from JSR Corporation, etc.

In the present invention, the filler preferably used is silica having a primary particle size of 50 nm or bigger.

When silica having a primary particle size of less than 50 nm is used, compression set is worsened. Also, if the primary particle size of silica is bigger than 50 nm, reinforcing property is a little, and when rubber hardness is to be adjusted to the same, much amount of the silica can be used, so that a molar fraction of the polymer that is thermally deteriorated is lowered whereby it can be expected the effect that heat resistance becomes good. Incidentally, when the primary particle size is too big, improvement in the effects is not so expected, so that the upper limit is considered to be 200 nm or so.

Here, the primary particle size of silica refers to a value obtained by actually measuring respective particle diameters of the silica from a scanning electron microscope photograph, and calculating as an average value. In the case that the silica comprises an aggregate or agglomerate of particles, the primary particle size of silica is the minimum particle size of the silica which can be detectable electron microscopically. Also, the above-mentioned particle size can be obtained as a diameter of the circle equal to each of the projected area of 100 particles existing in a certain area by electron microscopic observation of the dispersed particles.

An amount of the silica is in the range of 10 to 150 parts by weight, preferably in the range of 20 to 100 parts by weight, further preferably in the range of 30 to 80 parts by weight based on 100 parts by weight of the NBR polymer.

If the amount of the silica is less than 10 parts by weight, strength of the material is lowered so that it foams whereby molding becomes impossible. If the amount of the silica exceeds 150 parts by weight, viscosity of the material becomes extremely high so that mixing and kneading becomes impossible.

The silica of the present invention can be obtained as a commercially available product, and the commercially available product may be mentioned "Nipsil E74-P" available from Tosoh Silica Corporation, etc.

As the plasticizer of the present invention, an ether ester series plasticizer having a weight average molecular weight MW of 500 or more is used. It is preferably polyethylene glycol-di-2-ethylhexanoate having a weight average molecular weight MW of 500 or more.

Plasticizers other than the ether ester series plasticizer have poor compatibility with the polymer, and worsen heat resistance or compression set so that they are not suitable.

An amount of the plasticizer is in the range of 3 to 20 parts by weight, preferably in the range of 4 to 15 parts by weight, further preferably in the range of 4 to 10 parts by weight based on 100 parts by weight of the NBR polymer.

If it is less than 3 parts by weight, low temperature property is worsened, while if it exceeds 20 parts by weight, mixing and kneading becomes impossible.

Polyethylene glycol-di-2-ethylhexanoate which is the ether ester series plasticizer of the present invention can be obtained as a commercially available product, and the commercially available product may be mentioned "ADK CIZER RS-735" (weight average molecular weight MW: 850) or "ADK CIZER RS-700" (weight average molecular weight MW: 550) both available from ADEKA CORPORATION, etc.

The cross-linking agent preferably used is an organic peroxide having good compression set characteristics.

The organic peroxide to be used as the cross-linking agent may be used any materials as long as they can be generally used for a rubber without any particular limitation, and may be mentioned, for example, tert-butyl peroxide, dicumyl peroxide, tert-butyl cumyl peroxide, 1,1-di-(tert-butylperoxy)-3,3,5-trimethylcyclohexane, 2,5-dimethyl-2,5-di(tert-butylperoxy)hexane, 2,5-dimethyl-2,5-di(tert-butyl per-oxy)hexyne-3, 1,3-di(tert-butylperoxyisopropyl)benzene, 2,5-dimethyl-2,5-di(benzoylperoxy)hexane, tert-butyl peroxybenzoate, tert-butyl peroxyisopropyl-carbonate, n-butyl-4,4-di(tert-butylperoxy)valerate, etc.

An amount of the organic peroxide is 0.5 to 5 parts by weight, preferably 1 to 5 parts by weight based on 100 parts by weight of the NBR polymer. If the amount of the organic peroxide exceeds 5 parts by weight, cross-linked (vulcanized) molded products cannot be obtained by foaming in some cases, or even when it can be obtained, rubber elastic ultimate elongation is markedly lowered.

Also, as the cross-linking agent, an inorganic sulfur or an organic sulfur-containing compound may be used in combination in addition to the organic peroxide.

The inorganic sulfur may be specifically mentioned powdery sulfur, precipitated sulfur, colloidal sulfur, etc. The organic sulfur-containing compound may be mentioned tetramethyl thiuram, disulfide, selenium dimethyldithiocarbamate, etc.

To the rubber composition of the present invention may be optionally used, other than the above essential components, as a rubber formulating agent, a reinforcing agent such as carbon black, etc., a processing aid such as stearic acid, palmitic acid, paraffin wax, etc., an acid acceptor such as zinc oxide, magnesium oxide, etc., a compounding agent which has generally been used in the rubber industry such as an age resister, etc., within the range which does not impair the effects of the present invention depending on necessity.

The NBR composition of the present invention can be manufactured by, for example, mixing and kneading the above-mentioned formulated material by using a kneading machine under heating, for example, an intermixture, a kneader, a Banbury mixer, or an open roller, etc., further adding a crosslinking (vulcanizing) agent, a crosslinking (vulcanizing) aid, etc., and mixing and kneading these necessary components simultaneously.

Molding (crosslinking, vulcanization) can be carried out by the conventionally known method, for example, by using an injection molding machine, a compression molding machine, a vulcanizing press, etc., heating at about 150 to 200°C for about 3 to 60 minutes, and depending on necessity, secondary crosslinking in which heating at about 150 to 250°C for about 0. 5 to 24 hours may be carried out.

The NBR composition (material) in the present invention can be utilized with a broad range of the field as a rubber part(s), in particular, it can be preferably used as an intake manifold gasket, etc., requiring heat resistance, cold resistance and oil resistance.

### Examples

Examples of the present invention are explained. The present invention is not limited by such Examples.

### (Example 1)

### <Component and amount thereof >

NBR polymer ("NT4301 "; AN content: 23wt%, available from JSR Corporation) ··· 100 parts by weight
Filler: Silica ("Nipsil E74-P" available from Tosoh Silica Corporation; primary particle size: 80 nm) ··· 36 parts by weight
Plasticizer: Ether ester series plasticizer; Polyethylene glycol-di-2-ethylhexanoate ("RS735" available from ADEKA CORPORATION; weight average molecular weight: MW 850) ··· 4 parts by weight
Crosslinking accelerator: Tetrabenzylthiuram disulfide (Sanceler TBZTD available from Mitsubishi Chemical Corporation) ··· 1 part by weight
Peroxide cross-linking agent: Dicumyl peroxide (percumyl D available from NOF Corporation) ··· 4 parts by weight

All the starting materials as mentioned above except for the crosslinking (vulcanizing) agent or a crosslinking accelerator were subjected to mixing and kneading by a kneader to prepare a masterbatch at a discharge temperature of 100°C. Thereafter, the cross-linking agent and the crosslinking accelerator were added to the masterbatch by a roll kneader to prepare an objective rubber composition (NBR composition). The rubber composition was subjected to press vulcanization at a vulcanizing temperature of 180°C for 6 minutes to prepare a test sample.

### <Evaluation method>

The respective physical properties were measured by the methods mentioned below, and the measured results were shown in Table 1.

### 1. Normal physical property

Hardness Hs: conformed to JIS K6253: 1997 (DuroA (instantaneous))
Tensile strength Tb (MPa): conformed to JIS K 6251: 2010
Ultimate elongation Eb (%): conformed to JIS K 6251: 2010

### 2. Heat resistance

According to the heat-resistant aging test (according to JIS K6257: 2010), how the normal physical property values were changed under 150°C after 70 hours is shown. The results of heat resistance are shown in Table 1. With regard to hardness Hs, a changed value ΔHs (point) was shown. With regard to tensile strength Tb, it was showed by a changed ratio ΔTb (%), and the ultimate elongation Eb was also showed by a changed ratio ΔEb (%). When ΔHs<±10, ΔTb (%) <±35, and ΔEb<±50, it shows good heat resistance.

### 3. Cold resistance

According to the low temperature elasticity recovery test (TR test) (according to JIS K6261: 2006), TR-10 (°C) was measured and evaluated. Here, the TR-10 value is conformed to JIS K6261, a rotary sliding seal sample was elongated with 50% by a low temperature elasticity recovery tester, the temperature was lowered to vitrify the sample at the glass transition point (Tg) or lower, then, the temperature was gradually raised to relax the strain of the above-mentioned sample, and the temperature at which the length was recovered by 10% based on the initial ultimate elongation was made a TR-10 value. When the value is -20°C or lower, the material can be judged as good, and it is preferably -30°C or lower, further preferably - 40 °C or lower.

### 4. Oil resistance

According to the oil resistance test measurement method regulated to JIS K6258: 2010, the test piece was dipped in IRM903 oil at 120°C for 10 hours, and a volume expansion ratio (%) was obtained. When the material has the value of +45 or less, it can be evaluated to as good.

### 5. Compression set test

According to the measurement method conforming to JIS K6262: 2006, the compression set test was carried out. That is, an O-ring having a size of the test piece (JIS B2401: 2005) was sandwiched with a spacer having a predetermined thickness by metal plates and tightened by bolts to compress 25%. Then, the above-mentioned compressed O-ring was placed into a thermostat chamber setting at the conditions of a normal pressure and at 200°C, allowed to stand for 70 hours, then, a compression set ratio which becomes an index of compression set resistance was measured. When the compression set is large, a time to reach to fatigue fracture is fast. When the permanent compression strain is 30% or less, the material is good and 25% or less is more desired.

### (Example 2)

A cross-linked rubber sample was formed in the same manner as in Example 1 except for changing the NBR polymer ("NT4301 "; AN content: 23%, available from JSR Corporation) with an NBR polymer ("N250S" available from JSR Corporation) having an AN content of 20%, evaluated in the same manner therein, and the results were shown in Table 1.

### (Example 3)

A cross-linked rubber sample was formed in the same manner as in Example 1 except for changing the NBR polymer ("NT4301 "; AN content: 23%, available from JSR Corporation) with an NBR polymer ("N236H" available from JSR Corporation) having an AN content of 32%, evaluated in the same manner therein, and the results were shown in Table 1.

### (Example 4)

A cross-linked rubber sample was formed in the same manner as in Example 1 except for changing polyethylene glycol-di-2-ethylhexanoate ("RS735" available from ADEKA CORPORATION; a weight average molecular weight MW of 850) with an ether ester series polyethylene glycol-di-2-ethylhexanoate ("RS700" available from ADEKA CORPORATION) having a weight average molecular weight MW of 550, evaluated in the same manner therein, and the results were shown in Table 1.

### (Example 5)

A cross-linked rubber sample was formed in the same manner as in Example 1 except for changing an amount of polyethylene glycol-di-2-ethylhexanoate ("RS735" available from ADEKA CORPORATION; Weight average molecular weight MW850) to 10 parts by weight, evaluated in the same manner therein, and the results were shown in Table 1.

### (Comparative example 1)

A cross-linked rubber sample was formed in the same manner as in Example 1 except for changing the NBR polymer ("NT4301 "; AN content: 23%, available from JSR Corporation) with an NBR polymer ("Nipol DN401" available from ZEON Corporation) having an AN content of 18%, evaluated in the same manner therein, and the results were shown in Table 1.

### (Comparative example 2)

A cross-linked rubber sample was formed in the same manner as in Example 1 except for changing the NBR polymer ("NT4301 "; AN content: 23%, available from JSR Corporation) with an NBR polymer ("N220SH" available from JSR Corporation) having an AN content of 41%, evaluated in the same manner therein, and the results were shown in Table 1.

### (Comparative example 3)

A cross-linked rubber sample was formed in the same manner as in Example 1 except for changing polyethylene glycol-di-2-ethylhexanoate ("RS735" available from ADEKA CORPORATION; a weight average molecular weight MW of 850) with tri-2-ethylhexyl trimellitate ("ADK CIZER C9-N" available from ADEKA CORPORATION; a weight average molecular weight MW of 588) which is an ester series plasticizer, evaluated in the same manner therein, and the results were shown in Table 1.

### (Comparative example 4)

A cross-linked rubber sample was formed in the same manner as in Example 1 except for changing polyethylene glycol-di-2-ethylhexanoate ("RS735" available from ADEKA CORPORATION; a weight average molecular weight MW of 850) with an adipic acid/propylene glycol series polyester ("ADK CIZER P200" available from ADEKA CORPORATION; a weight average molecular weight MW of 2,000) which is a polyester series plasticizer, evaluated in the same manner therein, and the results were shown in Table 1.

### (Comparative example 5)

A cross-linked rubber sample was formed in the same manner as in Example 1 except for changing polyethylene glycol-di-2-ethylhexanoate ("RS735" available from ADEKA CORPORATION; a weight average molecular weight MW850) with dibutyldiglycol adipate ("RS107" available from ADEKA CORPORATION; a weight average molecular weight MW of 434) which is an adipic acid series plasticizer, evaluated in the same manner therein, and the results were shown in Table 1.

### (Comparative example 6)

A cross-linked rubber sample was formed in the same manner as in Example 1 except for changing the plasticizer to 0 parts by weight, evaluated in the same manner therein, and the results were shown in Table 1.

### (Comparative example 7)

A cross-linked rubber sample was formed in the same manner as in Example 1 except for changing an amount of the polyethylene glycol-di-2-ethylhexanoate ("RS735" available from ADEKA CORPORATION; a weight average molecular weight MW of 850) to 30 parts by weight, evaluated in the same manner therein, and the results were shown in Table 1.

### (Comparative example 8)

A cross-linked rubber sample was formed in the same manner as in Example 1 except for changing the silica ("Nipsil E74-P"; primary particle size 80 nm, available from Tosoh Silica Corporation) with silica ("Nipsil ER#100" available from Tosoh Silica Corporation) having a primary particle size of 32 nm, evaluated in the same manner therein, and the results were shown in Table 1.

**[Table 1]**

| (Parts by weight) | | | | | | | | | | | | | | | | |
|---|---|---|---|---|---|---|---|---|---|---|---|---|---|---|---|---|
| | | | | Example 1 | Example 2 | Example 3 | Example 4 | Example 5 | Comparative example 1 | Comparative example 2 | Comparative example 3 | Comparative example 4 | Comparative example 5 | Comparative example 6 | Comparative example 7 | Comparative example 8 |
| Rubber | NBR polymer | AN content | 18% | | | | | | 100 | | | | | | | |
| | | | 20% | | 100 | | | | | | | | | | | |
| | | | 23% | 100 | | | 100 | 100 | | | 100 | 100 | 100 | 100 | 100 | 100 |
| | | | 32% | | | 100 | | | | | | | | | | |
| | | | 41% | | | | | | | 100 | | | | | | |
| Filler | Silica | Primary particle size | 32nm | | | | | | | | | | | | | |
| | | | 80nm | 36 | 36 | 36 | 36 | 36 | 36 | 36 | 36 | 36 | 36 | 36 | 36 | 36 |
| | (Ether ester series) polyethylene glycol-di-2-ethylhexanoate (MW550) | | | | | | 4 | | | | | | | | | |
| Plasticizer | (Ether ester series) polyethylene glycol-di-2-ethylhexanoate (MW850) | | | 4 | 4 | 4 | | 10 | 4 | 4 | | | | | 30 | 4 |
| | (Ester series) (MW588) | | | | | | | | | | | | | | | |
| | (Polyester series) (MW2000) | | | | | | | | | | 4 | 4 | | | | |
| | (Adipic acid series) (MW434) | | | | | | | | | | | | 4 | | | |
| Normal physical property | Hardness (Hs) DuroA | | | 72 | 70 | 72 | 72 | 65 | 70 | 73 | 68 | 69 | 68 | | | 75 |
| | Tensile fracture strength (Tb) Mpa | | | 150 | 175 | 11.2 | 5.7 | 13.1 | 15.0 | 12.2 | 14.3 | 13.7 | 13.7 | 70 15.1 | Mixing and kneading impossible | 9.3 |
| | Tensile fracture elongation (Eb) % | | | 230 | 290 | 220 | 220 | 260 | 210 | 180 | 230 | 250 | 230 | 220 | | 160 |
| Heat-resistant | Hardness change (point) | | | +6 | +6 | +8 | +7 | +7 | +10 | +9 | +10 | +8 | +9 | +7 | | +6 |
| | Tensile fracture strength changed ratio (%) | | | +18 | +11 | +35 | +20 | +14 | +13 | +60 | +30 | +35 | +40 | -26 | | +39 |
| | Tensile fracture elongation changed ratio (%) | | | -35 | -43 | -27 | -33 | -30 | -46 | -24 | -50 | -61 | -39 | -56 | | -42 |
| Low temperature elasticity recovery test (°C) | | | | -36 | -42 | -26 | -37 | -42 | -44 | -18 | -37 | -35 | -34 | -38 | | -37 |
| Oil resistance test (Volume expansion ratio %) | | | | +30.7 | +40.2 | +10.6 | +30.5 | +27.3 | +45.1 | +5.3 | +30.5 | +35.3 | +34.2 | +32.0 | | +30.4 |
| Permanent compression strain (%) | | | | 27 | 25 | 23 | 27 | 29 | 27 | 23 | 30 | 42 | 35 | 23 | | 31 |

### <Evaluation>

From Table 1, it could be confirmed that the NBR compositions comprising a rubber composition in which 10 to 150 parts by weight of silica having a primary particle size of 50 nm or bigger and 3 to 20 parts by weight of polyethylene glycol-di-2-ethylhexanoate which is an ether ester series plasticizer having a weight average molecular weight MW of 500 or more have been used based on 100 parts by weight of an NBR polymer having an acrylonitrile content of 20 to 40% have good heat resistance, cold resistance and oil resistance, and have good compression set or other normal physical properties without any problem.

With regard to cold resistance, it can accomplish not only -20°C or lower, but also -30°C or lower (Examples 1 and 4) or -40°C or lower (Examples 2 and 5).

To the contrary, in Comparative example 1, it can be understood that it is inferior in heat resistance or oil resistance as compared with Examples 1 to 5 since the acrylonitrile content of the NBR polymer is 18% which is less than 20%.

Also, in Comparative example 2, it can be understood that it is inferior in heat resistance or oil resistance as compared with Examples 1 to 5 since the acrylonitrile content of the NBR polymer is 41 % which is 40% or more.

In Comparative examples 3, 4 and 5, it can be understood that they are inferior in heat resistance and compression set as compared with Examples 1 to 5 since the plasticizers are not an ether ester series ones. In Comparative example 3, the plasticizer having a weight average molecular weight MW of 588 is used but an ester series plasticizer other than the ether ester series plasticizer is used so that physical properties are not specifically improved.

In Comparative example 6, it can be understood that it is inferior in heat resistance as compared with Examples 1 to 5 since the plasticizer is not contained therein.

In Comparative example 7, as compared with Examples 1 to 5, it was unable to mixing and kneading, while the ether ester series plasticizer was used, the content thereof was a large amount as 30.

In Comparative example 8, it can be considered that it gave the results that heat resistance and compression set were inferior since the primary particle size of the silica was small as 32 nm.

From the results mentioned above, the NBR composition (material) in the present invention can be used with a broad range of the field as a rubber part(s), in particular, it can be verified that the composition can be preferably used as an intake manifold gasket, etc., requiring heat resistance, cold resistance and oil resistance.

## Claims

1. A NBR composition comprising an NBR polymer, silica, an ether ester plasticizer and a cross-linking agent, which comprises
100 parts by weight of the NBR polymer where an acrylonitrile content of the NBR polymer is within the range of 20 to 40%,
10 to 150 parts by weight of silica a primary particle size of which is within the range of 50 nm or bigger, and
3 to 20 parts by weight of an ether ester plasticizer a weight average molecular weight MW of which is 500 or more.

2. The NBR composition according to claim 1, wherein the ether ester plasticizer is polyethylene glycol-di-2-ethylhexanoate.

3. The NBR composition according to claim 1 or 2, which is used as an intake manifold gasket and other rubber part.

## Patentansprüche

1. NBR-Zusammensetzung umfassend ein NBR-Polymer, Siliciumdioxid, einen Ether-Ester-Weichmacher und ein Vernetzungsmittel, wobei die Zusammensetzung Folgendes umfasst:
100 Gewichtsteile des NBR-Polymers, wobei ein Acrylnitrilgehalt des NBR-Polymers im Bereich von 20 bis 40% liegt,
10 bis 150 Gewichtsteile Siliciumdioxid, dessen primäre Partikelgröße im Bereich von 50 nm oder größer liegt, und
3 bis 20 Gewichtsteile eines Ether-Ester-Weichmachers, dessen gewichtsgemitteltes Molekulargewicht MW 500 oder mehr beträgt.

2. NBR-Zusammensetzung nach Anspruch 1, wobei es sich bei dem Ether-Ester-Weichmacher um Polyethylenglycol-di-2-ethylhexanoat handelt.

3. NBR-Zusammensetzung nach Anspruch 1 oder 2, die als Ansaugkrümmerdichtung oder sonstiges Gummiteil verwendet wird.

## Revendications

1. Composition de caoutchouc NBR comportant un polymère NBR, de la silice, un plastifiant éther-ester et un agent de réticulation, qui comporte
100 parties en poids du polymère NBR, où la teneur en acrylonitrile du polymère NBR se situe dans la plage de 20 à 40 %,
10 à 150 parties en poids de silice, dont la taille de particules primaires se situe dans la plage de 50 nm ou plus grande, et
3 à 20 parties en poids d'un plastifiant éther-ester, dont le poids moléculaire moyen en poids est 500 ou plus.

2. Composition de caoutchouc NBR selon la revendication 1, dans laquelle le plastifiant éther-ester est di-2-éthylhexanoate de polyéthylèneglycol.

3. Composition de caoutchouc NBR selon la revendication 1 ou 2, qui est utilisée comme joint de collecteur d'admission et autre pièce en caoutchouc.
